# FASCICULE DE BREVET EUROPEEN

(11) **EP 2 086 778 B1**
(45) Date de publication et mention de la délivrance du brevet: **25.04.2018**
(21) Numéro de dépôt: 07826369.6
(22) Date de dépôt: 13.09.2007
(51) Int. Cl.: B60H 3/06

(54) **DISPOSITIF DE PURIFICATION D'AIR DE L'HABITACLE D'UN VÉHICULE NOTAMMENT, ASSOCIANT PLUSIEURS APPAREILS DE TRAITEMENT DE L'AIR À PURIFIER.**
VORRICHTUNG ZUR GRÜNDLICHEN LUFTREINIGUNG IN EINER FAHRZEUGFÜHRERKABINE MITTELS KOMBINATION VON VERARBEITUNGSGERÄTEN FÜR DIE ZU REINIGENDE LUFT
DEVICE FOR PURIFYING THE AIR ESSENTIALLY IN A VEHICLE COCKPIT, COMBINING PROCESSING APPARATUSES FOR THE AIR TO BE PURIFIED

(30) Priorité: 21.09.2006 FR 0608283
(43) Date de publication de la demande: 12.08.2009
(73) Titulaire: Valeo Systèmes Thermiques, 78321 Le Mesnil St Denis Cedex (FR)
(72) Inventeur: LADRECH, Frédéric, 78310 Maurepas (FR); ELLIOT, Gilles, 91080 Courcouronnes (FR)
(74) Mandataire: Metz, Gaëlle
(86) Numéro de dépôt international: PCT/IB2007/053697
(87) Numéro de publication internationale: WO 2008/047260

(56) Documents cités:
- EP-A- 1 413 465
- EP-A- 1 681 066
- EP-A1- 1 514 710
- EP-A1- 1 623 860
- DE-A1- 19 914 614
- DE-A1- 19 955 253
- DE-C1- 4 441 617
- GB-A- 2 252 923
- JP-A- 61 135 821
- US-A- 5 192 346
- US-A- 6 019 676
- US-A1- 2002 139 251
- US-A1- 2004 041 710

## Description

### Domaine technique de l'invention.

La présente invention est du domaine des dispositifs de purification d'air de l'habitacle notamment d'un véhicule ou d'une structure analogue non motorisée. Elle a pour objet un tel dispositif de purification d'air associant plusieurs appareils de traitement de l'air à purifier.

### Etat de la technique.

Dans le domaine des transports, transport automobile notamment, il est connu d'installer dans un habitacle d'une structure mobile automotrice ou tractée, un dispositif de purification de l'air de cet habitacle. Dans sa généralité, l'habitacle est formé d'une caisse destinée à loger des passagers, des marchandises et/ou du matériel, tel que l'habitacle d'un véhicule, d'une remorque, d'une caravane ou structure mobile analogue. Le dispositif de purification d'air est susceptible d'être intégré à une installation de ventilation, de chauffage et/ou de climatisation, ou d'être un dispositif indépendant et autonome installé en un quelconque endroit de l'habitacle. Le dispositif de purification d'air associe couramment divers appareils de purification d'air de types spécifiques qui sont placés dans le flux d'air à purifier qui le traverse.

Par exemple, un appareil d'un premier type est un filtre fonctionnant par tamisage et/ou par adsorption. Un filtre par tamisage est par exemple un filtre à média plissé ou non, ou est constitué d'une masse filtrante tissée ou non, tel que du type mousse, du type à alvéoles et/ou du type feutre. Un filtre par adsorption met en oeuvre un matériau tel que le charbon actif, la zéolithe ou matériau analogue, qui est plus particulièrement destiné à traiter les gaz et les odeurs. Il est connu des filtres combinés associant un tamis et un matériau d'adsorption. Par exemple encore, un appareil d'un deuxième type est un appareil à ionisation qui est destiné à collecter des particules présentes dans l'air à partir de leur chargement électrique puis de leur attraction électrostatique. Par exemple encore, un appareil d'un troisième type est un appareil à photocatalyse qui est destiné à irradier des microorganismes éventuellement présents dans l'air. Par exemple enfin, un appareil d'un quatrième type est un appareil de traitement de l'air par diffusion d'un agent volatil accessoirement odorant. Un tel appareil est par exemple constitué d'une cartouche logeant un substrat imprégné de l'agent volatil, qui peut avantageusement être rapportée sur un filtre à tamis du type à média plissé ou sur un filtre combiné comportant un tel média plissé.

Selon JP61135821 (NIPPON DENSO CO) par exemple, un tel dispositif de purification d'air comprend un boîtier traversé par le flux d'air à purifier, à l'intérieur duquel sont placés un pulseur pour provoquer une circulation du flux d'air à l'intérieur du boîtier, et des appareils de purification de cet air respectivement par filtration et par ionisation. Un canal de circulation d'air est ménagé dans le boîtier entre une entrée d'air et une sortie d'air, et loge les appareils de purification d'air qui sont successivement placés à l'intérieur du canal dans le sens de circulation du flux d'air à l'intérieur du boîtier. Ce dispositif est plus particulièrement un dispositif autonome destiné à être placé en un quelconque endroit de l'habitacle, et est notamment organisé en plafonnier ou analogue. Une telle organisation du dispositif implique que les moyens mis en oeuvre pour provoquer la circulation d'air et sa purification à l'intérieur du boîtier, doivent être agencés de manière à obtenir un dispositif d'un encombrement le plus faible possible. Plus particulièrement dans le cas d'un plafonnier ou analogue, le boîtier est d'un encombrement réduit suivant une première direction privilégiée correspondante à son épaisseur. Cependant, le boîtier s'étend au moins suivant une deuxième direction correspondante à la disposition successive des appareils de purification d'air. La compacité en épaisseur est avantageuse, mais est réalisée au détriment de l'encombrement du boîtier suivant la deuxième direction. Une réduction de l'encombrement du boîtier implique une limitation du nombre d'appareils de purification mis en oeuvre.

Il a été suggéré par EP1681066 (SHARP KK) un appareil de purification d'air par ionisation, qui est destiné à équiper un dispositif de climatisation. L'appareil de purification d'air par ionisation est installé à l'intérieur d'un canal que comporte un boîtier logeant un pulseur. L'air est admis à l'intérieur du boîtier et traverse un filtre combiné, puis traverse le pulseur pour être partiellement dirigé vers le canal logeant l'appareil de purification d'air par ionisation. Une telle organisation des modalités de purification et de circulation du flux d'air admis à l'intérieur du boîtier ne répond pas aux exigences de compacité et de fonctionnement relatives à un dispositif autonome qui est organisé en plafonnier ou analogue pour équiper un habitacle, avec pour conséquence une restriction du nombre d'appareils de purification susceptibles d'être mis en oeuvre. En outre, une telle organisation implique des pertes de charges aérauliques et des nuisances sonores importantes. EP 1 514 710 divulgue un appareil de purification d'air selon le préambule de la revendication 1.

### Objet de l'invention.

Le but de la présente invention est de proposer un dispositif de purification d'air d'un habitacle tel que d'une structure automotrice ou tractée, qui soit efficace et néanmoins peu encombrant, en limitant les pertes de charges aérauliques et les nuisances sonores. Il est plus particulièrement visé par la présente invention de proposer un tel dispositif qui soit un dispositif autonome globalement plan d'un encombrement réduit, tel qu'agencé en plafonnier ou analogue.
Le dispositif de la présente invention est un dispositif de purification d'air d'un habitacle. Ce dispositif comprend un boîtier à l'intérieur duquel circule un flux d'air mis en mouvement par un pulseur. Le boîtier comporte au moins une entrée d'air et au moins une sortie d'air entre lesquelles s'étend un canal de circulation d'air logeant le pulseur et une pluralité d'appareils de purification d'air de types spécifiques.

L'invention a pour objet un dispositif de purification d'air d'un habitacle selon la revendication 1.

Selon la présente invention, un tel dispositif est principalement reconnaissable en ce que les appareils de purification d'air sont placés en aval du pulseur dans le sens d'écoulement du flux d'air. Le canal de circulation d'air comprend une chambre d'admission d'air à l'intérieur du boîtier qui loge le pulseur et qui est en communication avec une pluralité de canaux secondaires disposés en parallèle les uns par rapport aux autres. Le canal de circulation d'air loge un filtre principal. L'un au moins des canaux secondaires loge au moins un appareil de purification d'air d'un type spécifique.

Le filtre principal est un filtre à au moins un média plissé. Au moins une partie de ce média est placée contre l'entrée d'air d'au moins un canal secondaire tandis que le restant de ce média est placé à l'entrée d'air d'un autre canal secondaire. La mise en application de la partie du média contre l'entrée d'air du canal secondaire correspondant signifie qu'il est placé en position d'obturation de cette entrée d'air, pour être traversé par le flux d'air secondaire correspondant préalablement à l'admission de ce flux d'air secondaire à l'intérieur du canal secondaire.

La partie du média placée contre la bouche d'entrée du canal secondaire est notamment formée d'un repli de ce média qui est disposé transversalement au plan général du filtre. Les entrées d'air respectives des canaux secondaires sont orientées dans des plans concourants. Ces canaux secondaires sont plus particulièrement respectivement affectés à l'évacuation d'un flux d'air secondaire après son passage à travers le filtre principal, et à l'évacuation d'un flux d'air secondaire vers au moins un appareil de purification d'air d'un type différent de celui du filtre principal.

Le repli du média est exploité pour fixer le filtre principal, par collage ou technique analogue, contre un élément porteur. Cet élément porteur est un élément du boîtier et/ou de l'appareil de purification intégrant le canal secondaire correspondant. Le cas échéant, cet élément porteur comporte l'entrée d'air du premier canal secondaire correspondant. La structure plissée du média et la position du filtre en aval du pulseur dans le sens d'écoulement du flux d'air est exploitée pour effectuer une purification de la totalité du flux d'air admis à l'intérieur du boîtier sans pour autant induire un accroissement d'encombrement du boîtier à partir de l'utilisation suffisante d'une partie du média, et notamment au moins partiellement d'un repli d'extrémité de ce média, pour purifier au moins un flux d'air secondaire préalablement au passage de ce flux d'air secondaire à travers un appareil de purification d'un autre type logé à l'intérieur du premier canal secondaire.

Le canal de circulation d'air est composé d'au moins trois parties successives dans le sens d'écoulement du flux d'air. Ces parties comprennent successivement :
*) la chambre d'admission d'air à l'intérieur du boîtier qui loge le pulseur,
*) une zone intermédiaire à travers laquelle circule le flux d'air globalement admis à l'intérieur du boîtier vers une zone de subdivision du canal de circulation d'air en pluralité de canaux secondaires, et
*) ladite zone de subdivision du canal de circulation d'air en pluralité de canaux secondaires.

La position du pulseur à l'intérieur de la chambre d'admission d'air à l'intérieur du boîtier signifie que les appareils de purification d'air que comprend le dispositif sont dans leur ensemble placés au-delà de la zone du canal de circulation d'air logeant le pulseur dans le sens d'écoulement du flux d'air. L'air est directement admis à l'intérieur de la chambre logeant le pulseur préalablement à toute purification. L'admission d'air à l'intérieur du boîtier correspond à une admission d'air directement à l'intérieur de la chambre, l'entrée d'air du boîtier étant notamment ménagée dans une paroi du boîtier délimitant la chambre.

On comprendra par appareils de purification d'air de types spécifiques des appareils de purification d'air dont le principe de fonctionnement leur est propre, tel que filtration par tamisage et/ou adsorption, voire aussi par diffusion d'un agent volatil accessoirement odorant, ou encore tel que par ionisation ou par photocatalyse. Un appareil de purification d'air peut être un appareil combiné, associant plusieurs appareils de purification d'un type respectif. La liste de principe de fonctionnement énoncée est donnée à titre indicatif et n'est pas limitative quant aux différents principes de fonctionnement des appareils de purification d'air équipant le dispositif de l'invention. Au regard de l'objet de la présente invention, l'appareil de purification d'air logé dans l'un des canaux secondaires est d'un type différent de celui logé dans un autre canal secondaire, voire d'un appareil de purification d'air logé dans une zone intermédiaire du canal de circulation d'air située en amont de sa zone de subdivision en canaux secondaires et en aval de la chambre dans le sens d'écoulement du flux d'air, pour un traitement global de ce dernier préalablement à son traitement partiel par un autre appareil de purification d'air placé à l'intérieur d'un canal secondaire.

La chambre est avantageusement constituée de la zone d'extrémité amont du canal de circulation d'air dans le sens d'écoulement du flux d'air, cette zone d'extrémité étant comprise entre l'entrée d'air et la zone de subdivision du canal de circulation d'air en une pluralité de canaux secondaires, et plus particulièrement entre l'entrée d'air et la zone intermédiaire du canal de circulation d'air.

La localisation du pulseur en aval immédiat de l'entrée d'air permet de mettre en correspondance le volume du canal de circulation d'air réservé à l'admission d'air à l'intérieur du boîtier au volume de la chambre logeant le pulseur, afin d'organiser l'agencement du boîtier et des différents canaux secondaires qu'il comporte indépendamment des modalités d'admission et de propulsion d'air à l'intérieur du boîtier. Le flux d'air globalement admis à l'intérieur du boîtier est ensuite réparti en une pluralité de flux d'air secondaires dont l'un au moins est traité par un appareil de purification d'un type spécifique.

Ces dispositions permettent de limiter les pertes de charges aérauliques et de réduire les nuisances sonores. Ces dispositions permettent aussi de restreindre l'encombrement du dispositif en évitant de placer les différents appareils de purification d'air de chaque type de manière à être traversés successivement par la totalité du flux d'air globalement admis à l'intérieur du boîtier. Cette restriction d'encombrement est aussi favorisée par la faculté offerte d'adaptation de la section, de l'agencement, de la disposition et/ou de la configuration, selon les besoins :
*) de la chambre d'admission d'air à l'intérieur du boîtier au regard de son volume et des modalités d'installation du pulseur,
*) du canal de circulation d'air dans sa zone située en aval du pulseur préalablement à sa subdivision en canaux secondaires dans le sens d'écoulement du flux d'air, pour un traitement global du flux d'air par au moins un appareil de purification d'air, filtre et/ou appareil de purification d'air par photocatalyse notamment,
*) du ou des conduits secondaires selon le volume d'air à traiter spécifiquement par l'un et/ou l'autre des appareils de purification d'air placés à l'intérieur d'un canal secondaire au moins, selon le principe de fonctionnement de ces appareils, et/ou selon le seuil et/ou la nature de la purification acceptés du flux d'air globalement admis à l'intérieur du boîtier.

La disposition et la répartition les uns par rapport aux autres des différents appareils de purification d'air dans le sens d'écoulement du flux d'air traversant le boîtier et/ou les canaux secondaires sont choisies selon les principes spécifiques de fonctionnement de ces appareils.

La faculté offerte de modularité des volumes de flux d'air traversant le canal de circulation d'air et plus particulièrement les canaux secondaires en aval du pulseur dans le sens d'écoulement du flux d'air offrent la possibilité de choisir les appareils de purification d'air et d'organiser le boîtier avec une relative liberté permettant de réduire l'encombrement de ce dernier et de limiter les pertes de charge aérauliques et les nuisances sonores.

Dans le cas de l'utilisation d'un appareil de purification d'air par ionisation et/ou par photocatalyse, il est préférable que le dispositif soit aussi équipé d'un filtre disposé en amont de celui-ci dans le sens d'écoulement du flux d'air, pour protéger le ou les autres appareils de purification d'air placés en aval. Dans ce cas, pour maintenir la position avantageuse du pulseur en aval immédiat de l'entrée d'air et pour éviter d'accroître outre mesure l'encombrement du boîtier :
*) le filtre est un filtre principal placé dans la zone intermédiaire du canal de circulation d'air, en aval de la chambre logeant le pulseur et en amont de la zone de subdivision du canal de circulation d'air en canaux secondaires dans le sens d'écoulement du flux d'air, et/ou
*) le filtre est un filtre secondaire placé à l'intérieur du canal secondaire logeant un appareil de purification d'air d'un autre type, appareil de purification d'air par ionisation et/ou par photocatalyse plus particulièrement.
*) le filtre est un filtre secondaire placé à l'intérieur d'un canal secondaire qui lui est individuellement réservé.

Le filtre est indifféremment un filtre par tamisage et/ou un filtre par adsorption, voire un filtre combiné constitué par exemple d'un filtre à média plissé ou d'un filtre non tissé du type mousse, du type à alvéoles et/ou du type feutre par exemple, qui est imprégné et/ou complété d'un matériau d'adsorption rapporté, et/ou qui est muni d'un appareil de purification d'air par diffusion d'un agent volatil, tel qu'une cartouche logeant un substrat porteur d'un agent traitant volatil préférentiellement odorant.

Les flux d'air dont le sens d'écoulement pris individuellement en considération pour les positions respectives amont et/ou aval des appareils de purification d'air, du pulseur, de la chambre, des canaux secondaires et/ou des zones du canal de circulation d'air, sont ceux les traversant.

Selon une variante de réalisation, la zone intermédiaire loge un filtre principal de purification globale du flux d'air en provenance de la chambre.

Un canal secondaire est susceptible de loger un filtre secondaire et/ou un appareil de purification d'air par ionisation et/ou un appareil de purification d'air par photocatalyse.

Un filtre secondaire est notamment placé dans un canal secondaire en étant disposé en amont d'un autre appareil de purification dans le sens d'écoulement du flux d'air, pour protéger cet appareil de purification en retenant au préalable d'éventuelles particules présentes dans le flux d'air. Cette variante de réalisation est à considérer dans le cas où une filtration du flux d'air n'est pas effectuée au préalable, notamment à l'intérieur du canal de circulation d'air préalablement à sa subdivision en canaux secondaires.

Selon une variante de réalisation, un premier canal secondaire loge un premier filtre secondaire. Un deuxième canal secondaire loge successivement dans le sens d'écoulement du flux d'air un deuxième filtre secondaire et un appareil de purification d'air par ionisation et/ou par photocatalyse.

L'air admis à l'intérieur du boîtier soit :
*) est globalement traité en aval du pulseur par au moins un appareil de purification d'air, filtre plus particulièrement, puis est fractionné en au moins deux flux d'air secondaires respectivement dirigés vers une pluralité de canaux secondaires,
*) est fractionné en plusieurs flux d'air secondaires en aval du pulseur sans purification préalable, les différents flux d'air secondaires s'écoulant à l'intérieur d'un canal secondaire respectif en vue de leur purification au moyen d'appareils de purification d'un type spécifique.

L'organisation en arborescence du canal de circulation d'air subdivisé en canaux secondaires dont l'un au moins loge un appareil de purification d'air d'un type spécifique est transposable aux canaux secondaires eux-mêmes pour procurer les mêmes avantages de purification partiel de l'air admis à l'intérieur du boîtier par un appareil de purification d'air spécifique.

Plus particulièrement, au moins l'un des canaux secondaires peut être lui-même subdivisé en canaux tertiaires dont l'un au moins loge au moins un appareil de purification d'air. Une telle division peut être développée pour chacun de l'ensemble des différents canaux composant cette arborescence.

Selon des premières modalités de fonctionnement du dispositif, chacun des flux d'air secondaires est purifié à l'intérieur du canal secondaire correspondant par au moins un appareil de purification d'air spécifique.

Selon des deuxièmes modalités de fonctionnement du dispositif, un premier flux d'air secondaire est évacué hors du boîtier sans purification opérée à l'intérieur du canal secondaire correspondant, tandis qu'au moins un deuxième flux d'air secondaire est purifié à l'intérieur du canal secondaire correspondant par au moins un appareil de purification spécifique. Ces modalités de fonctionnement correspondent plus particulièrement à une forme de réalisation selon laquelle le flux d'air globalement admis à l'intérieur du boîtier est préalablement purifié en amont de la zone de subdivision du canal de circulation d'air en une pluralité de canaux secondaires.

A l'intérieur d'un quelconque canal secondaire, le flux d'air secondaire est susceptible d'être fractionné en une pluralité de flux d'air tertiaires s'écoulant à l'intérieur de canaux tertiaires respectifs. Selon une première variante, chacun des flux d'air tertiaires est purifié par au moins un appareil de purification d'air spécifique. Selon une deuxième variante, un premier flux d'air tertiaire est évacué hors du boîtier sans purification à l'intérieur du canal tertiaire correspondant, tandis qu'au moins un deuxième flux d'air tertiaire est purifié à l'intérieur du canal tertiaire correspondant par au moins un appareil de purification spécifique.

La chambre est notamment constituée d'une partie du canal de circulation d'air formée de sa zone d'extrémité amont dans le sens d'écoulement du flux d'air. Cette zone d'extrémité est comprise entre l'entrée d'air et la zone de subdivision du canal de circulation d'air en une pluralité de canaux secondaires, voire le cas échéant entre l'entrée d'air et la zone intermédiaire du canal de circulation d'air logeant le filtre principal.

Les entrées d'air des canaux secondaires sont orientées les unes par rapport aux autres indifféremment dans des plans concourants et/ou dans des plans parallèles, tandis que les sorties d'air des canaux secondaires sont de préférence disposées dans un même plan, voire sont confondues pour former conjointement la sortie d'air du boîtier, et notamment sont débouchantes sur une même face du boîtier.

Les canaux secondaires s'étendent individuellement suivant au moins une direction d'extension correspondante à l'une au moins des dimensions du boîtier. Plus particulièrement, les canaux secondaires peuvent s'étendre suivant des directions générales concourantes de l'un à l'autre des canaux secondaires les uns par rapport aux autres, qui correspondent à des directions respectives d'extension du boîtier, avec pour avantage de permettre une réduction de l'encombrement de ce dernier. Ces dispositions permettent de réduire l'encombrement du boîtier en exploitant l'ensemble de ses dimensions pour l'extension des canaux secondaires, et de faciliter l'implantation du dispositif en un quelconque endroit de l'habitacle en optimisant le nombre de ses faces disponibles pour sa fixation sur un élément de structure du véhicule et/ou pour supporter un tableau de commande.

Par exemple, le dispositif étant agencé en plafonnier ou analogue, l'une des grandes faces du boîtier est exploitée pour l'évacuation des flux d'air secondaires tandis que sa grande face opposée est exploitée pour la fixation du dispositif contre le pavillon de l'habitacle, ou une structure porteuse analogue de l'habitacle, tel qu'un élément de renfort latéral. Les faces latérales du boîtier sont exploitées pour supporter un tableau de commande du fonctionnement du dispositif. Plus particulièrement, le boîtier d'un tel plafonnier comporte une paroi de base, une paroi latérale et une paroi de sommet opposée à la paroi de base prévue pour être appliquée contre un élément structurel de l'habitacle, tel que le pavillon. La paroi de base est susceptible de comporter au moins une entrée d'air et/ou au moins une sortie d'air. Une telle sortie d'air est susceptible d'être exploitée pour former une bouche de ventilation apte à améliorer le confort d'au moins un passager, en étant avantageusement aménagée en aérateur. La paroi latérale est susceptible de comporter au moins une entrée d'air et/ou au moins une sortie d'air. Le boîtier est susceptible d'être porteur d'organes de commande du fonctionnement du dispositif, ces organes de commande étant disposés sur la paroi de base et/ou sur la paroi latérale du boîtier. La ou les entrées d'air et/ou la ou les sorties d'air sont susceptibles d'être munies d'organes d'obturation à manoeuvre progressive ou non, tel que volet ou organes d'obturation analogues, qui sont manoeuvrables par l'utilisateur à partir d'au moins un organe de commande.

Les sorties d'air des canaux secondaires sont indifféremment communes pour former conjointement une même sortie d'air du boîtier, ou individuelles pour former des sorties d'air respectives du boîtier. Ces sorties d'air respectives sont indifféremment débouchantes sur une même face du boîtier et/ou sur des faces respectives du boîtier.

La sortie d'air et/ou l'entrée d'air d'au moins un canal secondaire, voire d'un canal tertiaire, est en communication avec un autre canal secondaire, voire d'un canal tertiaire, avec lequel il est disposé en parallèle.

Par exemple, l'entrée d'air et/ou la sortie d'air d'un canal secondaire peuvent être débouchantes sur un autre canal secondaire et/ou sur un canal tertiaire d'un autre canal secondaire. De même, l'entrée d'air et/ou la sortie d'air d'un canal tertiaire d'un premier canal secondaire peuvent être débouchantes sur un autre canal secondaire et/ou sur un canal tertiaire du premier canal secondaire et/ou d'un autre canal secondaire.

### Description des figures.

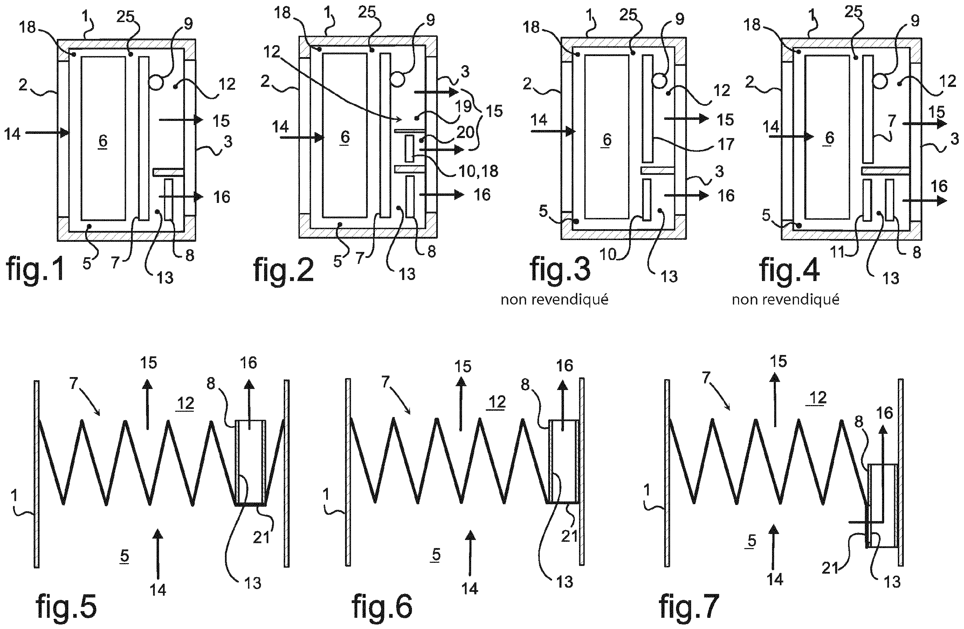

La présente invention sera mieux comprise, et des détails en relevant apparaîtront, à la lecture de la description qui va être faite d'exemples de réalisation, en relation avec les figures des planches annexées, dans lesquelles : Les fig.1 à fig.4 sont des schémas illustrant un dispositif de purification d'air selon diverses variantes respectives de réalisation de la présente invention.
Les fig.5 à fig.10 sont des schémas illustrant partiellement diverses variantes de réalisation d'un dispositif de purification d'air de la présente invention mettant en oeuvre un filtre comprenant un média plissé.
Les fig.11 à fig.13 sont des illustrations d'un dispositif de purification d'air de la présente invention associant un filtre à média plissé et un appareil de ionisation, respectivement schématiquement en perspective, en coupe longitudinale et en coupe transversale.

Sur les fig.1 à fig.4, un dispositif de purification d'air est destiné à équiper un habitacle d'une structure mobile. L'habitacle est une enceinte que comporte une structure mobile pour recevoir des passagers et/ou des marchandises et/ou du matériel. La structure mobile est une structure de transport susceptible d'être automotrice, tel qu'un véhicule, ou d'être une structure tractable par une structure automotrice, telle qu'une remorque, une caravane, une caisse de transport ou autre structure de transport analogue.

Le dispositif comprend un boîtier 1 muni d'au moins une entrée d'air 2 et d'au moins une sortie d'air 3. Ce boîtier 1 délimite une capacité formant un canal principal 5 de circulation d'air qui s'étend entre l'entrée d'air 2 et la sortie d'air 3. Le boîtier 1 loge un pulseur 6 pour provoquer la circulation d'air à l'intérieur du boîtier 1, et une pluralité d'appareils de purification d'air 7,8,9,10,11,17 de types différents au regard de leur principe de fonctionnement.

Les appareils de purification d'air 7,8,9,10,11,17 sont par exemple un filtre 7,11,17 à tamis et/ou à matériau d'adsorption, un appareil de purification d'air par ionisation 8, un appareil de purification par photocatalyse 10, ou encore une cartouche 9 de diffusion d'un agent traitant volatil accessoirement odorant. Les filtres 7,11,17 peuvent être du type à tamis comportant au moins un média plissé, ou un média non plissé, tel qu'un média formé d'un bloc de mousse, d'un feutre ou d'un textile tissé ou non. Sur les exemples de réalisation illustrés, les filtres 7,11,17 intègrent avantageusement un appareil de purification d'air 9 par diffusion d'un agent traitant volatil, préférentiellement odorant, tel qu'une cartouche odorante. Les filtres 7,11,17 à tamis peuvent être complétés par l'apport d'un matériau d'adsorption pour le traitement des gaz et des odeurs. D'une manière générale, un quelconque appareil de purification 7,8,9,11,17 équipant le dispositif peut être un appareil combiné associant dans un même organe des appareils de purification d'un type spécifique.

Le pulseur 6 est placé en amont des appareils de purification d'air 7,8,9,10,11,17 dans le sens d'écoulement de l'air à l'intérieur du boîtier 1, en étant logé dans une chambre 18 d'admission d'air à l'intérieur du boîtier 1. Cette chambre 18 est formée par la partie d'extrémité amont du canal 5 de circulation d'air dans le sens d'écoulement de l'air à l'intérieur du boîtier 1, et est en communication avec l'extérieur du boîtier par l'intermédiaire de l'entrée d'air 2, qui est ménagée à travers une paroi du boîtier 1 délimitant la chambre 18 logeant le pulseur 6. L'admission d'air à l'intérieur du boîtier 1 est réalisée en amont immédiat du pulseur 6, qui est traversé par le flux d'air 14 préalablement à la purification de ce dernier par les appareils de purification 7,8,9,10,11,17 disposés dans la partie aval du canal 5 de circulation d'air dans le sens d'écoulement du flux d'air à l'intérieur du boîtier 1.

Le canal 5 de circulation d'air est subdivisé en une pluralité de canaux secondaires 12,13, au nombre de deux sur les exemples de réalisation illustrés. Cette subdivision est ménagée en aval de la chambre 18 d'admission d'air logeant le pulseur 6.

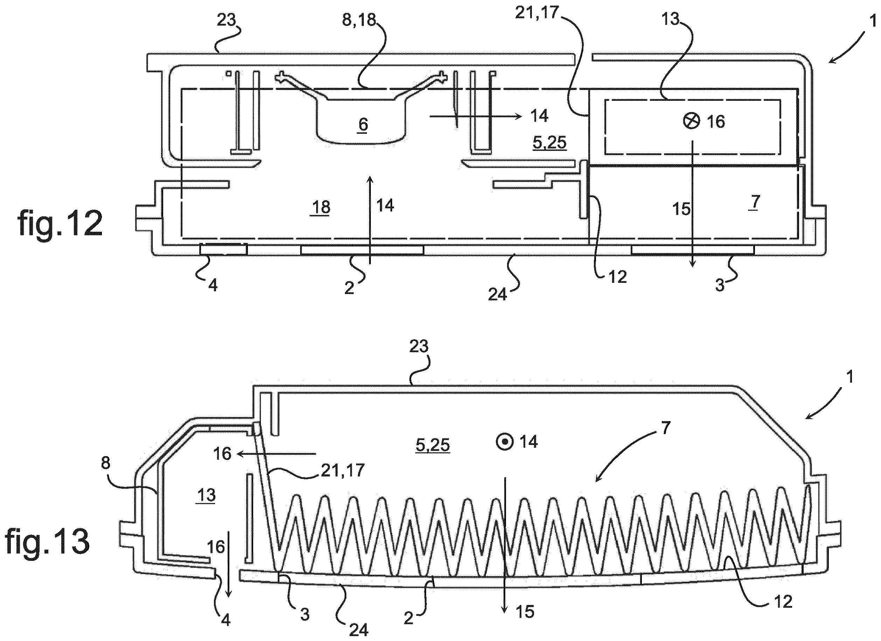

Sur les exemples de réalisation illustrés, le boîtier 1 comporte une sortie d'air 3 unique qui est commune à l'évacuation d'air hors des différents canaux secondaires 12,13. Cependant, le boîtier 1 est susceptible de comporter au moins deux sorties d'air, respectivement affectées à au moins un canal secondaire 12,13 tel que sur l'exemple de réalisation illustré sur les fig.12 et fig.13.

Sur les fig.1 et fig.2, le flux d'air global 14 est admis à l'intérieur du boîtier 1 en traversant le pulseur 6, puis est traité par un filtre principal 7 préalablement à sa répartition en une pluralité de flux d'air secondaires 15,16 qui sont dirigés vers un canal secondaire 12,13 respectif en vue de leur purification individuelle par un appareil de purification d'air d'un type spécifique, et/ou en vue de leur simple évacuation hors du boîtier 1.

Sur la fig.1, un premier flux d'air secondaire 15 est acheminé et évacué hors du boîtier 1 en circulant à travers un premier canal secondaire 12, sans traitement de purification supplémentaire. Un deuxième flux d'air secondaire 16 est acheminé et évacué hors du boîtier 1 en circulant à travers un deuxième canal secondaire 13, à l'intérieur duquel il est purifié par un appareil de purification d'air d'un type différent de celui du filtre principal 7, tel que par exemple un appareil du type à ionisation 8.

Sur la fig.2, un premier flux d'air secondaire 15 est acheminé et évacué hors du boîtier 1 en circulant à travers un premier canal secondaire 12, lui-même subdivisé en canaux tertiaires 19,20. Le flux d'air acheminé par un premier canal tertiaire 19 est évacué hors du boîtier 1 sans traitement supplémentaire de purification d'air, tandis que le flux d'air acheminé par un deuxième canal tertiaire 20 est traité par un appareil de purification d'air préalablement à son évacuation hors du boîtier 1. Cet appareil de purification d'air est d'un type différent du filtre principal 7, en étant par exemple constitué d'un appareil de purification d'air du type à photocatalyse 10. Un deuxième flux d'air secondaire 16 est acheminé et évacué hors du boîtier 1 en circulant à travers un deuxième canal secondaire 13, à l'intérieur duquel il est purifié par un appareil de purification d'air d'un type différent de celui du filtre principal 7 et de celui logé à l'intérieur du deuxième canal tertiaire 20. Par exemple, cet appareil de purification d'air est un appareil du type à ionisation 8.

Sur les fig.3 et fig.4, le canal principal 5 est subdivisé en canaux secondaires 12,13 directement en aval du pulseur 6 dans le sens d'écoulement du flux d'air 14 à travers le boîtier 1, sans traitement de purification préalable. Un premier flux d'air secondaire 15 circule à travers un premier canal secondaire 12 à l'intérieur duquel il est purifié par un appareil de purification d'air, tel qu'un filtre secondaire 17. Un deuxième flux d'air secondaire 16 circule à travers un deuxième canal secondaire 13 à l'intérieur duquel il est purifié par un ou plusieurs appareils de purification d'air 10,8,11. Par exemple sur la fig.3, un appareil de purification d'air combiné associant un photocatalyseur 10 et un filtre à tamis et/ou à matériau d'adsorption est disposé dans le deuxième canal secondaire 13. Par exemple encore sur la fig.4, un filtre secondaire 11 à média non plissé complété d'un matériau d'adsorption est disposé dans le deuxième canal secondaire 13 en amont d'un appareil de purification d'air par ionisation 8.

Sur les fig.5 à fig.8, le boîtier 1 loge un filtre principal 7 du type à média plissé et au moins un appareil de purification d'air du type à ionisation 8. Sur la fig.5, l'appareil de purification d'air du type à ionisation 8 est intégré dans un repli du filtre principal 7, tandis que sur les fig.6 à fig.8, l'appareil de purification d'air du type à ionisation 8 est joint au filtre principal 7 par l'intermédiaire d'un pli d'extrémité 21 du média plissé. Ce pli 21 est exploité pour la fixation du filtre principal 7 à un élément porteur, tel qu'une paroi ou un élément de cloison du boîtier 1 qui délimite le deuxième canal secondaire 13, et/ou une paroi de l'appareil de purification par ionisation 8 qui intègre dans ce cas le deuxième canal secondaire 13. Le pli 21 est placé contre l'entrée d'air du deuxième canal secondaire pour filtrer le flux d'air secondaire 16 préalablement à son passage à l'intérieur du deuxième canal secondaire 13.

Le premier flux d'air secondaire 15 circule après son passage à travers le filtre principal 7 à travers le premier canal secondaire 12, pour son évacuation hors du boîtier 1 sans traitement de purification supplémentaire.

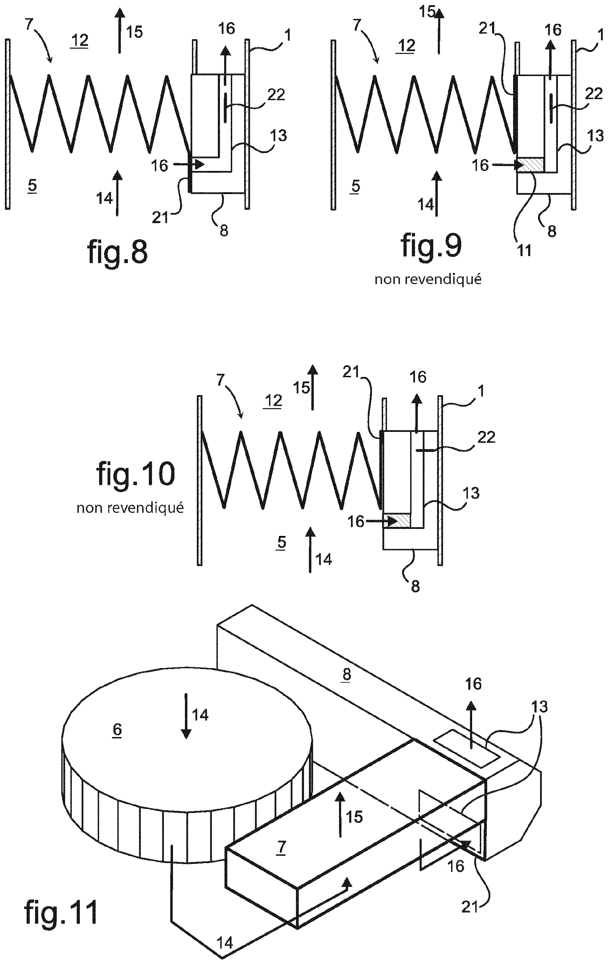

Sur les fig.9 et fig.10, le flux d'air global 14 est réparti en deux flux d'air secondaires 15,16 sans traitement préalable. Un premier filtre secondaire 17 est placé à l'intérieur du premier canal secondaire 12 pour la purification d'un premier flux secondaire 15. Un filtre secondaire 11 est placé à l'extrémité amont du deuxième canal secondaire 13 et en aval de l'appareil de purification d'air du type à ionisation 8, dans le sens d'écoulement du flux d'air secondaire 16 à l'intérieur du deuxième canal secondaire 13. Ce filtre secondaire 11 et cet appareil de purification par ionisation 8 sont destinés à purifier un deuxième flux secondaire 16 préalablement à son évacuation hors du boîtier 1.

Les variantes illustrées sur les fig.6 à fig.10 présentent l'avantage de faciliter l'alimentation électrique de la source d'ions 22 de l'appareil de purification d'air par ionisation 8.

La source d'ions 22 de l'appareil de purification d'air du type à ionisation 8 est disposée dans le deuxième flux d'air secondaire 16 soit parallèlement à son orientation générale d'écoulement tel qu'illustré sur les fig.8 et fig.9, soit perpendiculairement à son orientation générale d'écoulement tel qu'illustré sur la fig.10. Les variantes de réalisation représentées sur les fig.8 et fig.9 sont préférées au regard de l'orientation avantageuse de la source d'ions 22 parallèlement à l'orientation générale d'écoulement du flux d'air secondaire 16, dans la mesure où une telle orientation permet de minimiser l'encombrement de l'appareil de purification d'air du type à ionisation 8.

Sur les fig.11 à fig.13, le dispositif est organisé selon la variante de réalisation représentée sur la fig.8. Le flux global d'air 14 admis à l'intérieur du boîtier 1 au moyen du pulseur 6 est acheminé vers le filtre principal 7 qu'il traverse dans une première étape de purification. Le flux global d'air 14 est ensuite réparti en un premier flux d'air secondaire 15 acheminé par le premier canal secondaire 12 vers l'extérieur du boîtier 1, et en un deuxième flux d'air secondaire 16 acheminé vers l'appareil de purification d'air du type à ionisation 8 à travers le deuxième canal secondaire 13. Selon l'agencement du dispositif, celui-ci comporte plusieurs sorties d'air 3,4 respectivement affectées au premier canal secondaire 12 et au deuxième canal secondaire 13.

L'encombrement du boîtier 1 est minimisé en disposant le pulseur 6 dans la chambre 18 d'admission d'air à l'intérieur du boîtier 1. Ces dispositions permettent d'agencer librement la disposition et la configuration du filtre principal 7 et des canaux secondaires 12,13. Sur l'exemple de réalisation illustré, le filtre principal est placé à l'intérieur d'une zone intermédiaire 25 du canal 5 de circulation d'air en étant placé à proximité de la sortie d'air 3. Cette zone intermédiaire 25 est interposée entre la chambre 18 et la zone de subdivision du canal 5 de circulation d'air en canaux secondaires 12,13.

Les canaux secondaires 12,13 sont orientés suivant des directions différentes, l'un quelconque de ces canaux secondaires 12,13 s'étendant longitudinalement au boîtier 1, l'autre s'étendant transversalement au boîtier 1. Ces dispositions permettent de réduire l'encombrement général du boîtier 1 non seulement en épaisseur au regard de son plan général, mais aussi suivant ses directions d'extension dans ce plan général dont l'exploitation individuelle est optimisée. Le dispositif étant agencé en plafonnier, les canaux secondaires 12,13 s'étendent chacun sensiblement dans son plan global, l'épaisseur du plafonnier étant déterminée par l'épaisseur d'un seul l'appareil de purification d'air, et notamment celui de plus grande épaisseur tel que l'appareil de purification d'air par ionisation 8 sur l'exemple de réalisation illustré, ou par l'extension axiale du pulseur orientée suivant l'épaisseur du boîtier 1. Une paroi de sommet 23 du boîtier 1 est destinée à être appliquée contre un élément de paroi de l'habitacle. Une paroi de base 24 du boîtier 1, opposée à la paroi de sommet 22, comporte une entrée d'air 2 débouchante sur la chambre 18 logeant le pulseur 6, et les deux sorties d'air 3,4 en relation respectivement avec le premier canal secondaire 12 et avec le deuxième canal secondaire 13.

## Revendications

1. Dispositif de purification d'air d'un habitacle comprenant un boîtier (1) à l'intérieur duquel circule un flux d'air (14) mis en mouvement par un pulseur (6), le boîtier (1) comportant au moins une entrée d'air (2) et au moins une sortie d'air (3,4) entre lesquelles s'étend un canal (5) de circulation d'air logeant le pulseur (6) et une pluralité d'appareils de purification d'air (7,8,9,10,11,17) de type spécifique, les appareils de purification d'air (7,8,9,10,11,17) étant placés en aval du pulseur (6) dans le sens d'écoulement du flux d'air (14), le canal (5) de circulation d'air comprenant une chambre (18) d'admission d'air à l'intérieur du boîtier (1) qui loge le pulseur (6) et qui est en communication avec une pluralité de canaux secondaires (12,13) disposés en parallèle les uns par rapport aux autres, le canal (5) de circulation d'air loge un filtre principal (7) **caractérisé en ce que** l'un au moins des canaux secondaires (12,13) loge au moins un appareil de purification d'air (7,8,9,10,1 1,17), et **en ce que**
le filtre principal (7) est un filtre à au moins un média plissé, au moins une partie (21) de ce média étant placée contre l'entrée d'air d'au moins un canal secondaire (13) tandis que le restant de ce média est placé à l'entrée d'air d'un autre canal secondaire (12).

2. Dispositif selon la revendication 1, **caractérisé en ce que** la partie (21) du média du filtre principal (7) placée contre l'entrée d'air d'au moins un canal secondaire (13) est un pli d'extrémité du média plissé.

3. Dispositif selon l'une des revendications 1 ou 2, **caractérisé en ce que** le canal (5) de circulation d'air est composé d'au moins trois parties successives dans le sens d'écoulement du flux d'air, comprenant la chambre (18) d'admission d'air à l'intérieur du boîtier qui loge le pulseur, une zone intermédiaire (25) à travers laquelle circule le flux d'air (14) globalement admis vers une zone de subdivision du canal (5) de circulation d'air en pluralité de canaux secondaires (12,13).

4. Dispositif selon la revendication 3, **caractérisé en ce que** la zone intermédiaire (25) loge le filtre principal (7) de purification globale du flux d'air (14) en provenance de la chambre (18).

5. Dispositif selon l'une quelconque des revendications précédentes, **caractérisé en ce qu'**un canal secondaire (12,13) loge un filtre secondaire (11,17) et/ou un appareil de purification d'air par ionisation (8) et/ou un appareil de purification d'air par photocatalyse (10).

6. Dispositif selon l'une quelconque des revendications précédentes, **caractérisé en ce que** la partie du média placée contre la bouche d'entrée du canal secondaire (13) est formée d'un repli (21) de ce média disposé transversalement au plan général du filtre principal (7), les entrées d'air respectives des canaux secondaires (12,13) étant orientées dans des plans concourants.

7. Dispositif selon l'une quelconque des revendications 1 à 3, **caractérisé en ce qu'**un premier canal secondaire (12) loge un premier filtre secondaire (17) et **en ce qu'**un deuxième canal secondaire (13) loge successivement dans le sens d'écoulement du flux d'air (16) un deuxième filtre secondaire (11) et un appareil de purification d'air par ionisation (8) et/ou par photocatalyse (10).

8. Dispositif selon l'une quelconque des revendications précédentes, **caractérisé en ce qu'**au moins l'un des canaux secondaires (12,13) est lui-même subdivisé en canaux tertiaires (19,20) dont l'un au moins loge au moins un appareil de purification d'air (7,8,9,10,11,17).

9. Dispositif selon l'une quelconque des revendications précédentes, **caractérisé en ce que** la chambre (18) est constituée d'une partie du canal (5) de circulation d'air formée de sa zone d'extrémité amont dans le sens d'écoulement du flux d'air (14), comprise entre l'entrée d'air (2) et la zone de subdivision du canal (5) de circulation d'air en une pluralité de canaux secondaires (12,13).

10. Dispositif selon l'une quelconque des revendications précédentes, **caractérisé en ce que** les entrées d'air des canaux secondaires (12,13) sont orientés les uns par rapport aux autres indifféremment dans des plans concourants et/ou dans des plans parallèles, tandis que les sorties d'air des canaux secondaires (12,13) sont disposés dans un même plan pour déboucher sur une même face du boîtier (1).

11. Dispositif selon l'une quelconque des revendications précédentes, **caractérisé en ce que** les canaux secondaires (12,13) s'étendent suivant des directions générales concourantes de l'un à l'autre des canaux secondaires (12,13) correspondantes à des directions respectives d'extension du boîtier (1).

## Patentansprüche

1. Vorrichtung zur Luftreinigung eines Fahrzeuginnenraums, die ein Gehäuse (1) enthält, in dessen Innerem ein Luftstrom (14) zirkuliert, der von einem Gebläse (6) in Bewegung versetzt wird, wobei das Gehäuse (1) mindestens einen Lufteinlass (2) und mindestens einen Luftauslass (3, 4), zwischen denen sich ein Luftzirkulationskanal (5) erstreckt, in dem das Gebläse (6) untergebracht ist, und eine Vielzahl von Luftreinigungsgeräten (7, 8, 9, 10, 11, 17) speziellen Typs aufweist, wobei die Luftreinigungsgeräte (7, 8, 9, 10, 11, 17) stromabwärts hinter dem Gebläse (6) in Fließrichtung des Luftstroms (14) angeordnet sind, wobei der Luftzirkulationskanal (5) eine Luftansaugkammer (18) ins Innere des Gehäuses (1) enthält, in der das Gebläse (6) untergebracht ist und die mit einer Vielzahl von Sekundärkanälen (12, 13) in Verbindung steht, die zueinander parallel angeordnet sind, wobei im Luftzirkulationskanal (5) ein Hauptfilter (7) untergebracht ist und in mindestens einem der Sekundärkanäle (12, 13) mindestens ein Luftreinigungsgerät (7, 8, 9, 10, 11, 17) untergebracht ist, **dadurch gekennzeichnet, dass** der Hauptfilter (7) ein Filter mit mindestens einem in Falten gelegten Medium ist, wobei mindestens ein Teil (21) dieses Mediums gegen den Lufteinlass mindestens eines Sekundärkanals (13) angeordnet ist, während der Rest dieses Mediums am Lufteinlass eines anderen Sekundärkanals (12) angeordnet ist.

2. Vorrichtung nach Anspruch 1, **dadurch gekennzeichnet, dass** der Teil (21) des Mediums des Hauptfilters (7), der gegen den Lufteinlass mindestens eines Sekundärkanals (13) angeordnet ist, eine Endfalte des in Falten gelegten Mediums ist.

3. Vorrichtung nach einem der Ansprüche 1 oder 2, **dadurch gekennzeichnet, dass** der Luftzirkulationskanal (5) aus mindestens drei in Fließrichtung des Luftstroms aufeinanderfolgenden Teilen zusammengesetzt ist, die die Kammer (18) zur Luftansaugung ins Innere des Gehäuses, in dem das Gebläse untergebracht ist, und eine Zwischenzone (25) enthalten, durch die hindurch der Luftstrom (14) zirkuliert, der global zu einer Zone der Unterteilung des Luftzirkulationskanals (5) in eine Vielzahl von Sekundärkanälen (12, 13) angesaugt wird.

4. Vorrichtung nach Anspruch 3, **dadurch gekennzeichnet, dass** in der Zwischenzone (25) der Hauptfilter (7) zur globalen Reinigung des von der Kammer (18) kommenden Luftstroms (14) untergebracht ist.

5. Vorrichtung nach einem der vorhergehenden Ansprüche, **dadurch gekennzeichnet, dass** in einem Sekundärkanal (12, 13) ein Sekundärfilter (11, 17) und/oder ein Gerät zum Reinigen der Luft durch Ionisation (8) und/oder ein Gerät zum Reinigen der Luft durch Photokatalyse (10) untergebracht ist.

6. Vorrichtung nach einem der vorhergehenden Ansprüche, **dadurch gekennzeichnet, dass** der Teil des Mediums, der gegen die Eingangsöffnung des Sekundärkanals (13) angeordnet ist, von einem Umschlag (21) dieses Mediums gebildet wird, der quer zur allgemeinen Ebene des Hauptfilters (7) angeordnet ist, wobei die jeweiligen Lufteinlässe der Sekundärkanäle (12, 13) in konvergierenden Ebenen ausgerichtet sind.

7. Vorrichtung nach einem der Ansprüche 1 bis 3, **dadurch gekennzeichnet, dass** in einem ersten Sekundärkanal (12) ein erster Sekundärfilter (17) untergebracht ist, und dass in einem zweiten Sekundärkanal (13) nacheinander in Fließrichtung des Luftstroms (16) ein zweiter Sekundärfilter (11) und ein Gerät zum Reinigen der Luft durch Ionisation (8) und/oder durch Photokatalyse (10) untergebracht sind.

8. Vorrichtung nach einem der vorhergehenden Ansprüche, **dadurch gekennzeichnet, dass** mindestens einer der Sekundärkanäle (12, 13) selbst in Tertiärkanäle (19, 20) unterteilt ist, in mindestens einem von denen mindestens ein Luftreinigungsgerät (7, 8, 9, 10, 11, 17) untergebracht ist.

9. Vorrichtung nach einem der vorhergehenden Ansprüche, **dadurch gekennzeichnet, dass** die Kammer (18) aus einem Teil des Luftzirkulationskanals (5) besteht, der von seiner in Fließrichtung des Luftstroms (14) stromaufwärtigen Endzone gebildet wird, die zwischen dem Lufteinlass (2) und der Unterteilungszone des Luftzirkulationskanals (5) in eine Vielzahl von Sekundärkanälen (12, 13) liegt.

10. Vorrichtung nach einem der vorhergehenden Ansprüche, **dadurch gekennzeichnet, dass** die Lufteinlässe der Sekundärkanäle (12, 13) zueinander unterschiedslos in konvergierenden Ebenen und/oder in parallelen Ebenen ausgerichtet sind, während die Luftauslässe der Sekundärkanäle (12, 13) in einer gleichen Ebene angeordnet sind, um auf einer gleichen Seite des Gehäuses (1) zu münden.

11. Vorrichtung nach einem der vorhergehenden Ansprüche, **dadurch gekennzeichnet, dass** die Sekundärkanäle (12, 13) sich in allgemeinen konvergierenden Richtungen von einem der Sekundärkanäle (12, 13) zum anderen erstrecken, die jeweiligen Ausdehnungsrichtungen des Gehäuses (1) entsprechen.

## Claims

1. Air purification device for a passenger compartment, comprising a casing (1) inside which there circulates an air stream (14) moved by a fan (6), the casing (1) comprising at least one air inlet (2) and at least one air outlet (3, 4) between which there extends an air circulation duct (5) housing the blower (6) and a plurality of air purification apparatuses (7, 8, 9, 10, 11, 17) of specific type, the air purification apparatuses (7, 8, 9, 10, 11, 17) being placed downstream of the blower (6) in the direction of flow of the air stream (14), the air circulation duct (5) comprising a chamber (18) for admitting air inside the casing (1) which houses the fan (6) and which is in communication with a plurality of secondary ducts (12, 13) arranged in parallel with respect to one another, the air circulation duct (5) housing a main filter (7) and at least one of the secondary ducts (12, 13) housing at least one air purification apparatus (7, 8, 9, 10, 11, 17), **characterized in that** the main filter (7) is a filter with at least one folded medium, at least a part (21) of this medium being placed against the air inlet of at least one secondary duct (13), whereas the remainder of this medium is placed at the air inlet of another secondary duct (12).

2. Device according to Claim 1, **characterized in that** the part (21) of the medium of the main filter (7) that is placed against the air inlet of at least one secondary duct (13) is an end fold of the folded medium.

3. Device according to either of Claims 1 and 2, **characterized in that** the air circulation duct (5) is composed of at least three successive parts in the direction of flow of the air stream, comprising the chamber (18) for admitting air inside the casing which houses the fan, an intermediate zone (25) through which there circulates the air stream (14) globally admitted towards a zone for subdividing the air circulation duct (5) into a plurality of secondary ducts (12, 13) .

4. Device according to Claim 3, **characterized in that** the intermediate zone (25) houses the main filter (7) for global purification of the air stream (14) emanating from the chamber (18).

5. Device according to any one of the preceding claims, **characterized in that** a secondary duct (12, 13) houses a secondary filter (11, 17) and/or an ionization air purification apparatus (8) and/or a photocatalysis air purification apparatus (10) .

6. Device according to any one of the preceding claims, **characterized in that** the the part of the medium placed against the inlet mouth of the secondary duct (13) is formed by a fold (21) of this medium arranged transversely to the general plane of the main filter (7), the respective air inlets of the secondary ducts (12, 13) being oriented in concurrent planes.

7. Device according to any one of Claims 1 to 3, **characterized in that** a first secondary duct (12) houses a first secondary filter (17) and **in that** a second secondary duct (13) successively houses, in the direction of flow of the air stream (16), a second secondary filter (11) and an ionization air purification apparatus (8) and/or a photocatalysis air purification apparatus (10).

8. Device according to any one of the preceding claims, **characterized in that** at least one of the secondary ducts (12, 13) is itself subdivided into tertiary ducts (19, 20), of which at least one houses at least one air purification apparatus (7, 8, 9, 10, 11, 17).

9. Device according to any one of the preceding claims, **characterized in that** the chamber (18) is constituted by a part of the air circulation duct (5) that is formed by its upstream end zone in the direction of flow of the air stream (14), which zone is contained between the air inlet (2) and the zone for subdividing the air circulation duct (5) into a plurality of secondary ducts (12, 13).

10. Device according to any one of the preceding claims, **characterized in that** the air inlets of the secondary ducts (12, 13) are oriented with respect to one another equally well in concurrent planes and/or in parallel planes, whereas the air outlets of the secondary ducts (12, 13) are arranged in one and the same plane so as to open out onto one and the same face of the casing (1).

11. Device according to any one of the preceding claims, **characterized in that** the secondary ducts (12, 13) extend in concurrent general directions from one to the other of the secondary ducts (12, 13) corresponding to respective directions of extension of the casing (1).
